# EUROPEAN PATENT APPLICATION

(11) **EP 1 773 028 A1**
(43) Date of publication of application: **11.04.2007**
(21) Application number: 05300807.4
(22) Date of filing: 10.10.2005
(51) Int. Cl.: H04L 29/14

(54) **Establishing emergency voice communications in an IP network using a peer-to-peer protocol**

(71) Applicant: Alcatel Lucent, 75008 Paris (FR)
(72) Inventor: Pérez Hernández, Maria Del Mar, Alcatel España SA, 28045 Madrid (ES); Poza Jiménez, Manuel, 28045 Madrid (ES)
(74) Representative: Chaffraix, Sylvain

(57) **Abstract**

System and method for establishing a voice or data communication in a Internet Protocol (IP) communication network (1) especially for VoIP the network comprising a gateway (13,23) for interconnecting PSTN telephones to the IP network and at least one call server (15,24). In case of failure in the communication link between the gateway (13) and the call server (14) using SIP, the gateway initiates an alternative signalling procedure by means of a peer-to- peer communication link for establishing communication, through an alternative communication link with a node (40), said node being adapted to redirect the communication to a destination terminal (21,43) thus enabling communication even though there is a fault in the network.

## Description

The present invention relates to a system and a method for establishing voice and/or data communications, in particular the invention relates to establishing emergency calls or emergency data communications, in a telecommunication network. More particularly, the invention relates to redirecting emergency voice calls or emergency data transmissions, from a faulty signaling path to an available, non-faulty, signaling path.

### BACKGROUND OF THE INVENTION

Recent developments in telecommunication networks provide for the possibility of placing telephone calls through the Internet which is generally referred to as Internet Telephony. In particular, transmission of voice signals over the Internet is generally known as voice over IP, or VoIP in abbreviated form (where IP stands for Internet Protocol). In a VoIP call, the signal travels from a voice environment network to an IP environment network and vice-versa. In the following, the terms "IP network" are used for referring to any network using Internet Protocol, be it related to a global network, e.g. the so-called World Wide Web, or a network with limited reach such as a local network.

It is to be noted however that in the present specification, a VoIP communication is not to be construed as being limited to communicating only voice signals. Those skilled in the related art will realize that also data may be transmitted in a VoIP communication. Therefore any reference herein to VoIP is to be construed as covering both types of transmission.

When voice travels through an IP network, the voice signals need to be transmitted in packets. This form of transmission, known as "packet mode", which is appropriate for communication through a packet network such as the Internet, is different from the conventional mode of transmission of voice signals, known as "circuit mode", which is used in conventional telephony networks such as the so-called Public Switched Telephone Networks (PSTN).

Likewise, data transmissions that were traditionally transported using circuit-switched networks (i.e. in circuit mode), such as transmissions using a modem or an Integrated Services Digital Network (ISDN), can nowadays also be transported through an IP network.

When voice or data is transmitted from an IP network to a PSTN or to an ISDN, or vice-versa, it is required that the circuit mode transmission is converted into packet mode, or vice-versa, in order to maintain the communication active. The conversion is usually done by means of an interface, which may be a hardware device and/or a software program, known as a "media gateway".

Media gateways are also used to connect PSTN or ISDN terminals (such as analogue phones, modems and ISDN devices) to the IP network. This kind of gateways is usually known as "access gateway".

In the following, for the sake of simplification of the description, media gateway or access gateway will be referred to as "gateway". Thus, in general terms, a gateway provides connectivity between two networks which use incompatible protocols as discussed in the examples above.

A gateway used for the above purposes usually communicates with a "call server". A call server is a software application implementing call control in modern networks (e.g. Next Generation Networks), wherein packet transport is used to carry voice or multimedia flows. The term "call server" is used in the present specification as a generic term that may cover different environments and products. By way of non-limiting example a call server may be a Megaco/H.248 media gateway controller as is well-known in the art; other known types may also be used as long as their operation falls within the scope of the present invention. In summary, a call server provides centralized call intelligence.

In a VolP communication, a master/slave relationship is preserved at all times between a call server and a gateway in order to ensure signaling control and connection management on the call.

This however causes a drawback in the sense that the availability of the service becomes dependent on the correct operation of the call server. If the call server fails or is not reachable, the service is interrupted. In order to avoid such service interruptions due to the failure of a call server one known solution is the use of one or several secondary call servers that are introduced in the telecommunication network so as to temporarily replace the primary call server in case of a failure of the latter. However, despite having secondary call servers installed in the network, situations may arise in which it would not be possible to contact any one of these call servers (neither the primary nor the secondary ones). One such situation may arise, for example, in the case of a natural disaster wherein part of a telecommunication network could become isolated from call servers. In such situations, even if the local network, from which a call is originated is not damaged, a call that in a normal situation would be controlled through the primary or secondary call centers, could not be established due the complete isolation of that part of the network from the corresponding call servers. This means that one would not be able to even establish emergency calls or emergency data transmissions, which under normal conditions are given priority as regards service availability.

It is therefore desired that a solution is provided in order to be able to establish at least emergency communications in case of unavailability of the primary and secondary call servers.

### DESCRIPTION OF THE INVENTION

The above objective is reached by using the solution proposed by the present invention according to which, in case of loss of contact between the gateway and the call server, a peer-to-peer signaling procedure is initiated between the gateway and the emergency service, for example based on SIP (Signal Initiation Protocol) or any other suitable protocol, in order to redirect certain types of communications through an available communication path. The type of communications to be redirected may be determined by the network operator or the service providers or by any appropriate managing entity of the network. For instance, priority subscribers, such as government lines, could be enabled to send and receive voice calls or data communications.

For the sake of simplicity, a voice call or a data communication will be referred to in the present specification as "communication" and an emergency voice call or an emergency data communication will be referred to as "emergency communication".

Such emergency communications may be established based on emergency dialing patterns for obtaining a particular response or service, such as an emergency service.

Accordingly one object of the present invention is that of providing a method for establishing a voice or data communication in an Internet Protocol (IP) communication network, the network comprising a gateway and at least one call server, characterized in that the method comprises the steps of;
- detecting unavailability of a communication link between the gateway and said at least one call server;
- initiating at the gateway, an alternative signaling procedure for establishing communication, through an alternative communication link with a node, said link being a peer-to-peer communication link; and
- establishing communication through said alternative communication link.

Another object of the present invention is that of providing a voice over Internet Protocol (VoIP) communication network, the network comprising a gateway connected to the at least one call server adapted for establishing a first signaling procedure with said at least one call server, characterized in that the gateway is further connected to a node through a peer-to-peer communication link and is adapted for initiating an alternative signaling procedure for establishing a communication, through said peer-to-peer communication link with said node when said first signaling procedure is unavailable.

A further object of the present invention is that providing a gateway unit for use in a voice over Internet Protocol (VoIP) communication network, the gateway being connected to at least one call server adapted for establishing a signaling procedure with said at least one call server, characterized in that the gateway is further connected to a node through a peer-to-peer communication link and is adapted for initiating an alternative signaling procedure for establishing a communication, through said peer-to-peer communication link, with said node.

A still further object of the present invention is that of providing a node for cooperating with the gateway of the present invention by mean of a peer-to-peer communication link, and adapted for establishing a communication to a destination terminal in response to a signaling procedure initiated by said gateway and received through said peer-to-peer communication link

These and further features of the present invention are explained in more detail in the following description as well as in the claims with the aid of the accompanying drawings.

### BRIEF DESCRIPTION OF THE DRAWINGS

Figure 1 is a schematic representation of a telecommunication network implementing an exemplary embodiment of the solution of the present invention.
Figure 2 is a flow-chart representation of an example of main steps of the procedure performed by or for a gateway for establishing an emergency communication, according to the present invention.
Figure 3 is a block diagram representing an exemplary embodiment of the main blocks constituting a gateway for use in the present invention.

### EXAMPLES OF PREFERRED EMBODIMENTS

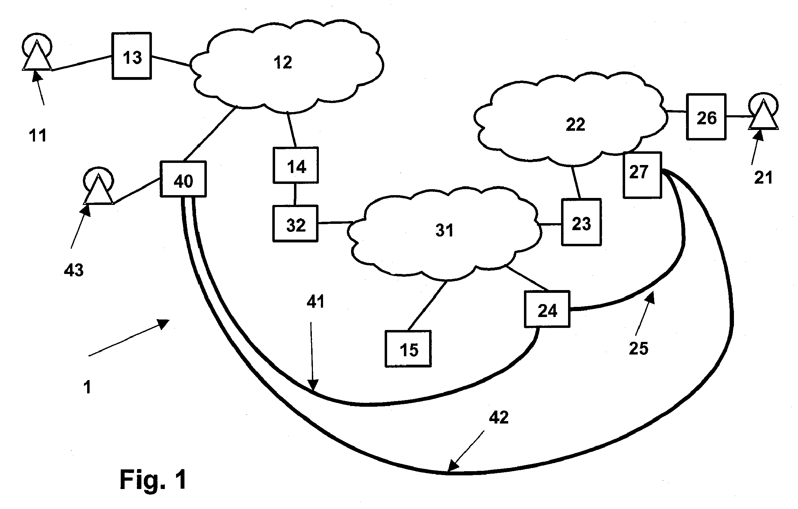

Figure 1 shows an example of a telecommunication network 1 in which a VoIP communication may be implemented. It is to be noted that the network 1 shown in figure 1 may comprise a plurality of networks of different type such as IP networks 12 or 31 and circuit mode networks such a PSTN networks 22. The basic principles of operation of such a network are well known by those skilled in the related are. Nevertheless a short description is provided herein for the sake of clarity.

As stated further above, VolP relates to communicating voice - and possibly data - over an IP network. In order to achieve this, voice may travel from a voice network environment to an IP network environment. In case of using voice legacy equipment, the latter can be directly connected to a gateway that provides access to the IP network.

Figure 1 shows a case in which the calling party say at user terminal 11 and the called party say at destination terminal 21 are both located within respective voice network environments. However, those skilled in the art will realize that the calling party or the called party may be located in other types of combination of voice and IP network environments for the implementation of the present invention. Also both the calling party and the called party may be adapted for receiving a voice call or a data transmission.

According to the scheme shown in figure 1, a user terminal 11 is connected to a first IP network 12 implementing packet mode connectivity through a gateway 13 which is connected to the first IP network 12 , on the one hand, and to the end user terminal 11, on the other. As stated further above, a gateway serves as an interface between the voice environment of the end user terminal 11 and the IP network 12. The IP network 12 is in turn connected to intermediate equipment such as for example routers which, as is known in the art, are used for routing the packet transmission towards appropriate destinations. In the example of figure 1, the router 14 routes the transmission from IP network 12 towards router 32 which in turn routes the transmission towards the IP network 31.

The IP network 31 is further connected to a circuit mode network 22, in this example a PSTN, through a gateway 23. The circuit mode network 22 provides connectivity to the destination terminal 21, to which the communication is eventually addressed, through the local exchange 26 in a manner known in the art.

In the example of figure 1, a call server 15 is configured to control the call traffic, or data transmission, passing through gateway 13 and another call server 24 is configured to control the call traffic, or data transmission, passing through gateway 23.

Call servers 15 and 24 may be located at any convenient location, for example within the IP network 31 or the IP network 12 or any other. Call servers however require connectivity with the circuit mode networks toward which the corresponding gateways act as interface. In figure 1, call server 24 is shown to be in connection with the circuit network 22 through a connection 25 and local exchange 27.

The above description in relation to figure 1 is a general representation of a conventional VoIP configuration, in a typical Next Generation Network (NGN). Under normal, non-faulty conditions, communications may be established between the two end points of the network, namely from user terminal 11 to destination terminal 21.

However, it may so happen that communication is interrupted between the gateway 13 and the call server 15. Due to this interruption, communications can no longer be established between the two end points. In order to remedy this interruption, the network may have provisioned the use of secondary call server(s) (not shown in the figure). The secondary call server(s) would then replace the function of the primary call server 15 in order to provide connectivity with the gateway 13 and thus ensure the possibility of placing calls or establishing communication.

However, in a situation where the primary call server and the secondary call server(s) become unavailable, for example because the network in which they are located is completely or partially damaged, this conventional configuration becomes unusable. Consequently, not only normal calls, but also emergency communications could not be established.

According to the present invention, a link is provided between gateway 13 and a node 40 based on a peer-to-peer configuration. A peer-to-peer configuration, as known in the related art, provides direct control communication from an end point to another end point without passing through intermediate call servers. The link established between the gateway 13 and node 40 is preferably a logical link, however other types of links such as physical links based on the use of cable or fiber connection may also be employed.

Therefore in the example provided in figure 1, due to the presence of a link - in case of failure in the conventional transmission path - gateway 13 communicates with node 40 directly and without intervention of any other intermediate call server. In case of establishing a logical link between the gateway 13 and the node 40, the link is established by any known suitable protocol such as for example SIP. Consequently, in case of interruption of communication between gateway 13 and call server 15 (and secondary call servers, if any), the interruption does not affect node 40 and thus gateway 13 maintains connectivity with node 40. This allows for placing calls or establishing communication in a selective manner through the link established between the gateway 13 and the node 40.

Node 40, may be configured based on any resource constituting a junction, branch or concentration of communication lines in a network such as a server, a concentrator, a front-end processor, a router or the like. Node 40 may then be configured to redirect the call, or the data communication, to the end point where the emergency communication is intended to be directed to

The redirection of the communication from the node 40 may be made in various manners. One of such manners may be using a peer-to-peer link to a convenient point of the destination network. In figure 1 one example of such redirection is represented by a link 41 between the node 40 and the call server 24.

Alternatively, the redirection may be made indirectly, using intermediate entities between node 40 and the destination terminal of the communication. The intermediate entity may be any combination of packet mode supporting network and circuit mode supporting network, selected according to the particular requirements of each application. The intermediate entity is connected to the destination terminal to which in this alternative case, the communication is to be directed.

Another alternative situation may be one in which the calling party and the called party are both located in the same network while the call server is in a different network. This situation may occur frequently in cases where the communication is intended for a local emergency service, such as for example a Fire Department, located in a nearby geographical location with respect to the calling party, but the call server is in a network which is not in the same geographic area as that of the emergency service. This situation is schematically represented by the destination terminal 43, assumed to be in the same network as the calling party user terminal 11 and gateway 13. The call server 15 is, as previously described, connected to a different network 31. In this case, where a faulty condition arises, gateway 13 communicates with the node 40 by means of a peer-to-peer link and node 40 then directs the communication to the destination terminal 43 that could be directly connected to node 40 (as shown in the figure) or through a gateway (not shown in the figure).

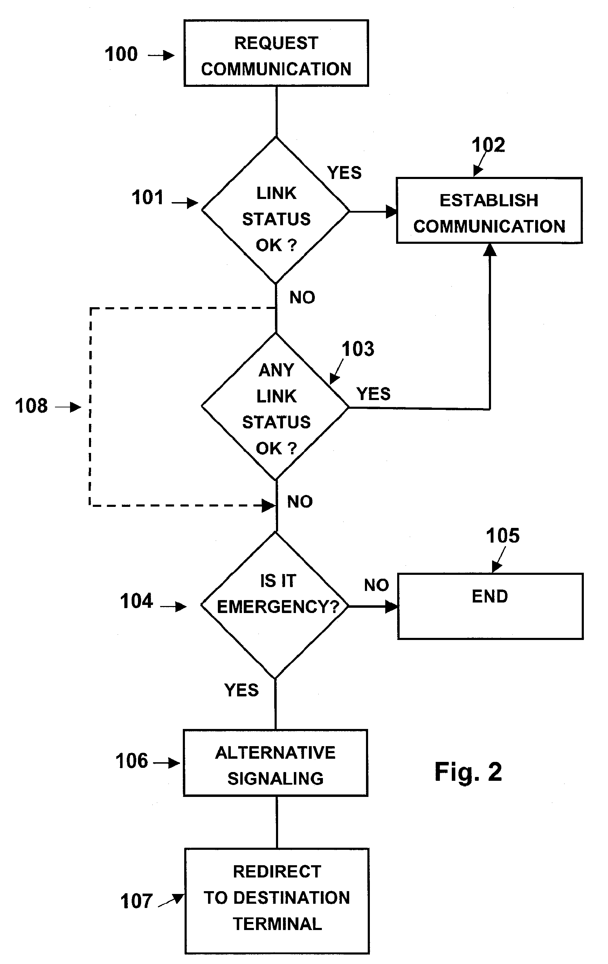

With the above arrangement, and referring to the procedure as shown in figure 2, the following steps are taken in order to establish an emergency communication.
i- In step 100, gateway 13 receives a request for transmitting a communication.
ii- In step 101, gateway 13 checks the status of control link (indicative of the quality of signaling in transmission) between gateway 13 and call server 14; in case the above control link is available, the communication is established as conventionally known. This is represented in figure 2 by an arrow from step 101 to step 102.
iii- If the above control link is not available, and assuming that the network may optionally comprise secondary call servers, the gateway 13 checks the status of the control link between gateway 13 and a secondary call server as shown by step 103. If the control link to a secondary call server is available, gateway 13 establishes a control association with the secondary call server and the communication is established as conventionally known. This is represented by an arrow from step 103 to step 102. If the control link is not available with a secondary call server, the procedure is repeated with other secondary call servers until an available control link is found in which case the communication is established using the available link, as conventionally known. This repetition of the procedure is represented in figure 2 in a simplified manner by means of only one block stating "any link status OK?" in step 103. This block is to be construed as an indication that the repetition of this procedure may be necessary with respect to a plurality or even to all secondary call servers in the network.
   As stated above, secondary call servers may be present in the network as an optional feature. Step 103 in figure 2 thus represents this optional situation. However if no secondary call server is present, the procedure follows from step 101 directly to step 104 as shown by the broken line 108.
iv- If all the above links are unavailable, gateway 13 checks, as shown in step 104, the type of the incoming call request. If the incoming call request is not of emergency type, no communication is established and the operation is terminated as shown by the arrow from step 104 to step 105.
v- If the communication is of an emergency type, gateway 13 initiates, as shown in step 106, an alternative signaling procedure, through an alternative link to node 40, the link thus established being a peer-to-peer communication link.
vi- In step 107, node 40 redirects the emergency communication to the desired destination terminal to which the emergency communication was intended to be sent

It is to be noted that the above procedure is provided only in an exemplary manner and the invention may not be construed as being limited to the above procedure. Those skilled in the art will appreciate that alternative procedures may be applied as long as they remain within the scope of the present invention. In particular, the order of executing the steps taken in the procedure may vary. For example step 104 may be executed after step 100 and before step 101.

The above procedure may be performed, for instance, by using one or more conventional processors included in the gateway 13 or in a separate unit being in bi-directional connectivity with the gateway 13. The processor(s) may be programmed in a suitable manner, known by those skilled in the related art, so as to perform the required controls and generate appropriate commands.

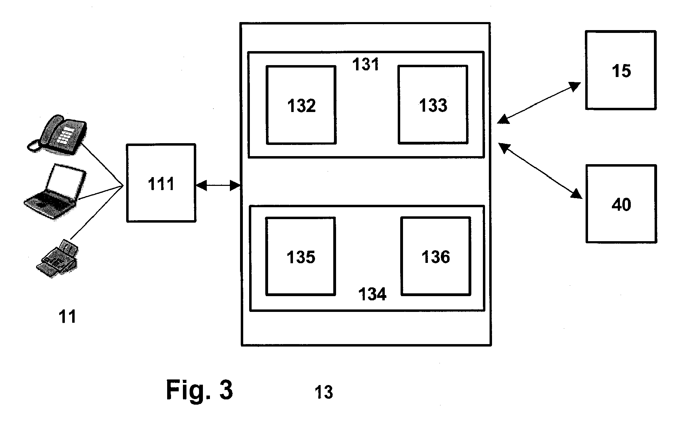

Figure 3 shows a block diagram with the main components of a gateway 13 in accordance with the present invention. As shown in the figure, user terminals of different type, generally shown by reference numeral 11, may be used such as a POTS (plain old telephony system) unit, a computer or a facsimile machine, to communicate through a subscriber line interface 111 with gateway 13.

Gateway 13 comprises two main functional blocks 131 and 134. Signaling and control functions are performed by block 131 in order to provide signaling interface with the call server 15 in normal, non-faulty, working conditions or with the peer-to-peer node 40, in an emergency condition. On the other hand, block 134 performs the tasks of digital signal and packet processing in order to process signals coming from the subscriber line interfaces encapsulating them in packets that are transmitted to the network. The function of the digital signal and packet processing block 134 is known in the related art, thus a detailed description thereon is considered not necessary.

Inside the signaling and control block 131, there are two functional sub-blocks. Sub-block 132 is adapted to establish a control association with a given protocol 1 (for example Megaco/H.248 or any other suitable protocol) with the call server 15 in a master/slave mode, wherein the gateway 13 acquire the slave's role while the call server 15 operates as master. The second sub-block 133 is related to operation in emergency conditions, i.e. when it is not possible to reach any of the provisioned call servers as discussed above. Therefore, sub-block 133 is used for establishing a peer-to-peer association with an emergency node 40, for example any suitable server using SIP or other suitable protocols.

The user terminal 11 from which the communication is initiated, may be any known device allowing for placing a voice call such as a POTS telephone or a computer or facsimile machine connected to a modem or an ISDN equipment.

The called party terminal 21 or 43, to which the communication is intended for may be any known device adapted for receiving either voice calls in circuit mode such as a POTS unit, or data transmissions in voiceband data such as a digital computer, or voice and data transmissions such an ISDN device.

Node 40 may include programmed instructions so as to perform the following operations:
- once the alternative signaling procedure is initiated between the gateway 13 and the node 40, the latter establishes the communication directly with the destination terminal if the latter is connected to 40 (the link between node 40 and the destination terminal 43 in figure 1); or
- once the alternative signaling procedure is initiated between the gateway 13 and the node 40, the latter automatically redirects the emergency communication, through a pre-established route, towards the called party gateway or to any other intermediate entity capable of transmitting the communication to the called party destination terminal; or,
- once the alternative signaling procedure is initiated between the gateway 13 and the node 40, the latter selects, by means of appropriate software and based on pre-established criteria, the route through which the communication is to be redirected towards the called party gateway or to any other intermediate entity capable of transmitting the communication to the called party destination terminal.

The pre-established criteria may for example be based on minimizing the resource occupancy of the network or on the type of the emergency service requested.

The peer-to-peer communication may be initiated based on for example a SIP (Signal Initiation Protocol) or any other suitable protocol.

The communication between the gateway 13 and the node 40 may be of any known kind. For example the gateway may send a message in which the destination terminal who should receive the emergency communication is identified. In an IP environment, this is typically done by including the so-called Uniform Resource Identification (URI) of the destination that can have different formats such as a "name@host" format. Alternatively, the communication may be based on the use of a directory number. Still another alternative for performing the communication would be that of including, by the gateway 13, an indication of the nature of the emergency communication. For example, an emergency communication intended for a Fire Department may have a certain indication which may be distinguished by the node 40 from other indications related to other destinations such as the Police Department, ambulance service, etc. Thus, the node 40 will redirect the communication based on the indication provided.

The node 40 may be an independent node especially adapted for maintaining a peer-to-peer link with the gateway 13. Alternatively, as already discussed, the node 40 may form part of another network, different from the networks to which gateway 13 is connected. In this case, node 40 is preferably configured to redirect the emergency communication once received, based on pre-established priority criteria.

It is to be noted that while the solution proposed by the present invention is in principle conceived for placing emergency communications, it is not be construed as being limited to only such type of communications. Therefore, the solution proposed herein is equally applicable to situations where it is desired to redirect a communication, for any particular reason and whatever its nature may be, using the peer-to-peer link between the gateway (13) and the node (40).

As can be readily appreciated, the solution proposed by the present invention provides substantial improvement in the level of reliability of a VoIP network, in particular when an emergency communication cannot be established due damages to the network.

## Claims

1. Method for establishing a voice or data communication in an Internet Protocol (IP) communication network (1), the network comprising a gateway (13, 23) and at least one call server (15, 24) **characterized in that** the method comprises the steps of;
- detecting unavailability of a communication link between the gateway (13) and said at least one call server (14);
- initiating at the gateway (13), an alternative signaling procedure for establishing communication, through an alternative communication link with a node (40), said link being a peer-to-peer communication link; and
- establishing communication through said alternative communication link.

2. Method according to claim 1 further comprising the step of:
- redirecting, at said node (40), the communication to a destination terminal (21, 43) to which the communication is intended to be sent.

3. Method according to claim 1 or 2, wherein the step of detecting unavailability of a communication link is performed by checking the status of communication links with respect to a plurality or to all call servers with which the gateway (13) is in connection.

4. Method according to any one of the preceding claims wherein the gateway (13) checks the type of the communication requested to be transmitted and initiates the alternative signaling procedure with a node (40) if the communication is of emergency type.

5. Method according to any one of the preceding claims, wherein once the alternative signaling procedure is initiated between the gateway (13) and the node (40), the latter establishes the communication directly with the destination terminal (43) if the destination terminal is directly connected to said node 40.

6. Method according to any one of the claims 1 to 4, wherein once the alternative signaling procedure is initiated between the gateway (13) and the node (40), the latter automatically redirects the emergency communication, through a pre-established route, towards a called party gateway or towards any other intermediate entity capable of transmitting the communication to the called party destination terminal.

7. Method according to any one of the claims 1 to 4, wherein once the alternative signaling procedure is initiated between the gateway (13) and the node (40), the latter selects, by means of appropriate software and based on pre-established criteria, the route through which the communication is to be redirected towards a called party gateway or towards any other intermediate entity capable of transmitting the communication to the called party destination terminal.

8. A voice over Internet Protocol (VoIP) communication network (1), the network comprising a gateway (13, 23) connected to the at least one call server (15, 24) adapted for establishing a first signaling procedure with said at least one call server (15, 24), **characterized in that** the gateway (13) is further connected to a node (40) through a peer-to-peer communication link and is adapted for initiating an alternative signaling procedure for establishing a communication, through said peer-to-peer communication link with said node (40) when said first signaling procedure is unavailable.

9. A network according to claim 8, wherein said node (40) is adapted for redirecting the communication to a destination terminal (21, 43) to which the communication is intended to be sent.

10. A network according to claim 9, wherein said node (40) is in peer-to-peer connection with a gateway (13) corresponding to said destination terminal (21, 43), or in connection with intermediate network elements being in connection with said destination terminal (21, 43).

11. A gateway unit for use in a voice over Internet Protocol (VolP) communication network (1), the gateway (13, 23) being connected to at least one call server (15, 24) adapted for establishing a signaling procedure with said at least one call server (15, 24), **characterized in that** the gateway (13) is further connected to a node (40) through a peer-to-peer communication link and is adapted for initiating an alternative signaling procedure for establishing a communication, through said peer-to-peer communication link, with said node (40).

12. A node (40) for cooperating with the gateway of claim 11 by mean of a peer-to-peer communication link and adapted for establishing communication to a destination terminal (21, 43) in response to a signaling procedure initiated by said gateway (13) and received through said peer-to-peer communication link.

13. A node according to claim 12, wherein the node (40) is connected directly to the destination terminal (43) and is adapted for establishing the communication directly with the latter, once an alternative signaling procedure is initiated between the gateway (13) and the node (40).

14. A node according to claim 12, wherein the node (40) is adapted for automatically redirecting the emergency communication, through a pre-established route, towards the destination terminal or towards an intermediate entity capable of transmitting the communication to the destination terminal, once the alternative signaling procedure is initiated between the gateway (13) and the node (40).

15. A node according to claim 12, wherein the node (40) is adapted for selecting, by means of appropriate software and based on pre-established criteria, a route through which the communication is to be redirected towards the destination terminal or towards an intermediate entity capable of transmitting the communication to the destination terminal, once the alternative signaling procedure is initiated between the gateway (13) and the node (40).
